Europäisches Patentamt

European Patent Office

Office européen des brevets

(19)

(11) **EP 1 400 886 A1**

(12) **DEMANDE DE BREVET EUROPEEN**

(43) Date de publication:
**24.03.2004 Bulletin 2004/13**

(51) Int Cl.$^7$: **G05F 1/67**

(21) Numéro de dépôt: **03292203.1**

(22) Date de dépôt: **09.09.2003**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK** | (72) Inventeur: **Capel, Antoine**<br>**31120 Goyrans (FR)** |
| (30) Priorité: **19.09.2002 FR 0211597** | (74) Mandataire: **Smith, Bradford Lee**<br>**Compagnie Financière Alcatel,**<br>**Département de Propriété Industrielle,**<br>**5, rue Noel Pons**<br>**92734 Nanterre Cedex (FR)** |
| (71) Demandeur: **ALCATEL**<br>**75008 Paris (FR)** | |

(54) **Circuit de conditionnement pour une source de puissance au point de puissance maximum, générateur solaire et procédé de conditionnement**

(57)　L'invention concerne un circuit de conditionnement qui mesure des points de fonctionnement de la source de puissance pour en déduire la caractéristique courant-tension de celle-ci et déterminer directement la tension correspondant à son MPP, sans faire appel à un quelconque algorithme de recherche qui fait osciller le point de fonctionnement de l'organe de puissance autour de ce MPP.

　La tension maximum VMPP est fournie à un contrôleur qui régule une cellule de puissance en l'asservissant sur sa tension d'entrée jusqu'à ce que la tension en sortie de la source soit égale à la tension maximale $V_{MPP}$.

　L'invention concerne également un générateur solaire et un procédé de conditionnement associé.

　Application particulière aux satellites de fortes puissances.

FIG_4

EP 1 400 886 A1

**Description**

La présente invention concerne les sources de puissance et plus précisément l'exploitation de sources de puissance pour lesquelles la courbe de la puissance fournie en fonction de la tension aux bornes de la source présente un maximum.

Pour une telle source, la puissance fournie est maximale lorsque la tension présente une valeur donnée. Il est intéressant pour exploiter au mieux la source de puissance - en tirer une puissance maximale - que la tension aux bornes de la source soit autant que possible égale à cette valeur donnée.

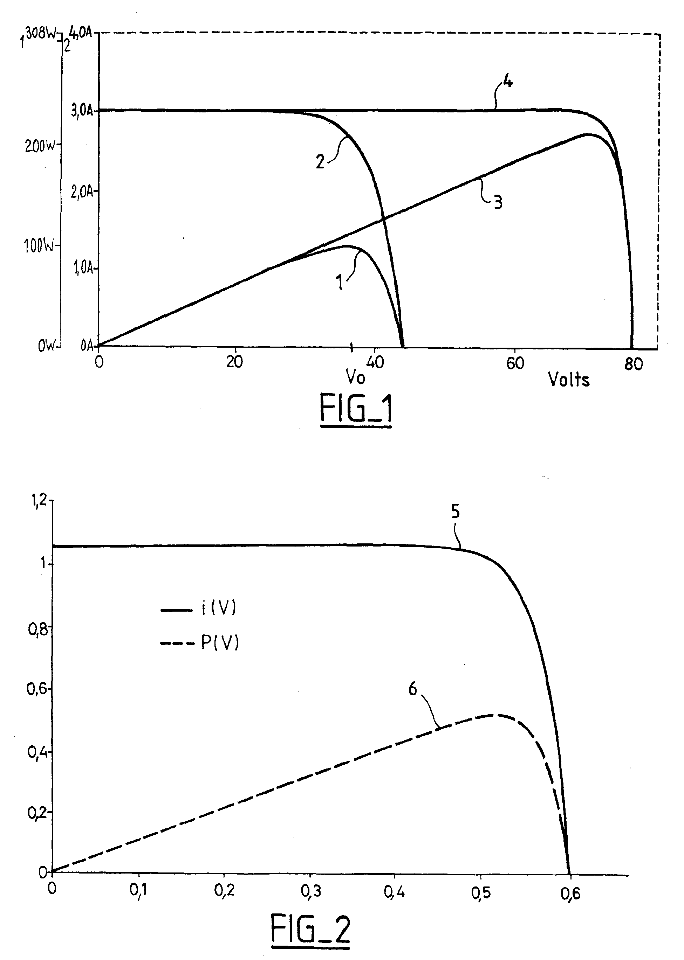

Les générateurs solaires utilisés pour les satellites constituent un exemple d'une telle source de puissance. La figure 1 montre un graphe du courant et de la puissance en fonction de la tension aux bornes du générateur, dans l'exemple d'un générateur formé d'un montage série d'une multiplicité de cellules Si BSR ("Back Surface Reflector" en langue anglaise) ; de telles cellules sont disponibles dans l'industrie spatiale. On a porté le long de l'axe des ordonnées le courant fourni par le générateur solaire, en ampères, ainsi que la puissance délivrée par le générateur, en watts; on a porté le long de l'axe des abscisses la tension aux bornes du générateur, en volts. Les courbes 1 et 2 sur la figure 1 correspondent à un fonctionnement à une température de + 100°C; les courbes 3 et 4 correspondent à un fonctionnement à une température de -100°C. La courbe 2 sur la figure 1 est un graphe du courant en fonction de la tension; elle montre que le courant fourni par les cellules diminue lorsque la tension dépasse une valeur de l'ordre de 35 V, ce qui s'explique par un phénomène de saturation des cellules; la courbe 4 est similaire, à ceci près que la tension de saturation est de l'ordre de 75 V. La courbe 1 sur la figure 1 est un graphe de la puissance fournie par le générateur solaire; elle montre que la puissance fournie présente un maximum, qui dans l'exemple présente une valeur de l'ordre de 100 W et est atteint pour une valeur V0 de la tension qui est de l'ordre de 38 V. La courbe 4 est similaire à la courbe 2, avec des valeurs de puissance maximale et de tension V0 respectivement de l'ordre de 200 W et 70V. Ces courbes ne constituent qu'un exemple particulier de générateur dans lequel le graphe de la puissance fournie en fonction de la tension de sortie présente un maximum.

Pour exploiter un tel générateur solaire ou plus généralement une telle source de puissance, il est intéressant que la tension aux bornes de la source soit aussi proche que possible de la valeur V0 de la tension pour laquelle la source délivre une puissance maximale. Ce problème se pose avec une acuité particulière dans le cas des générateurs solaires utilisés dans les satellites. En effet, pour ces générateurs solaires, la tension V0 pour laquelle la puissance fournie par le générateur est maximale varie en fonction de la température à laquelle le générateur est soumis, comme représenté à la figure 1; cette tension V0 varie aussi en fonction

- de l'intensité du rayonnement solaire auquel le générateur est exposé;
- du vieillissement du générateur.

Pour un satellite, la température peut typiquement varier dans une plage de - 100°C à +100°C (cas d'orbite terrestre basse). L'intensité du rayonnement solaire peut varier en fonction de l'éloignement du soleil; pour une mission depuis la Terre vers Mars, l'intensité du rayonnement solaire peut varier dans un rapport de 3 à 1. Le vieillissement du générateur provoque la mise en court-circuit de certaines cellules. Dans l'ensemble, la tension V0 peut typiquement varier dans un rapport de 1 à 2, et pourrait par exemple varier de 40 à 80 V.

Ainsi donc, une des difficultés majeures à surmonter dans la prédiction du point de fonctionnement optimal réside dans la dépendance de la puissance délivrée par un générateur solaire avec des paramètres tels que l'énergie solaire incidente, fonction de la position des cellules vis à vis des rayons lumineux, de la température des cellules exposées au soleil mais dissipant de l'énergie par réflection et conduction vers la surface arrière non exposée, et enfin du vieillissement de ces cellules et de leurs détériorations imposés par l'environnement tels que micro cassures, impacts de météorites.

Une autre difficulté concerne la nature du paramètre à optimiser, la puissance électrique, qui ne peut être capté directement. En effet les deux paramètres électriques qui sont directement mesurables sont le courant et la tension d'une cellule ou du générateur solaire. La puissance résulte de la multiplication des valeurs instantanées de ces paramètres. La détermination de la puissance maximale revient à calculer la dérivée de la puissance instantanée en fonction du courant ou de la tension et à asservir cette dérivée à une valeur nulle. Tous les algorithmes de recherche de cette dérivée font appel à une excitation du point de fonctionnement du générateur solaire à l'aide d'un convertisseur DC/DC permettant une excursion de ce point autour de sa position optimale (MPPT) sans pouvoir s'y fixer de façon durable.

La conception d'un tel convertisseur MPPT avec des performances de rendement et de stabilité permettant une utilisation de longue durée dans l'espace n'a pas permis à ce principe de concurrencer les concepts basés sur la distribution d'une tension régulée à l'aide de régulateurs shunt de type S3R (pour "Sequential Switching Shunt Regulator" en anglais) ou S4R (pour "Sequential Switching Shunt and Séries Regulator" en anglais) pour des satellites en orbite géostationnaire (dit GEO pour "Geostationary Earth Orbit satellites" en anglais).

L'utilisation de plus en plus fréquente de satellites en orbites basses (dit LEO pour "Low Earth Orbit satellites" en anglais), avec des arrangements en constellation de plusieurs dizaines de satellites disposant de puissances de quelques KW, a de nouveau remis à l'ordre du jour les concepts MPPT. La raison essentielle est que, sur de telles missions, impliquant des éclipses fréquentes avec des périodes ensoleillées courtes, de l'ordre de 60 minutes, le réseau d'utilisation met en oeuvre des unités opérant en impulsions de puissance de fortes intensités. Ce type d'utilisation est très contraignant pour la batterie qui doit être rechargée rapidement avec de forts courants sur de courtes périodes. Il est évident que, dans ce contexte, le générateur solaire joue un rôle essentiel et que, sous peine de surdimensionnement, il apparaît nécessaire de le polariser à son point de puissance maximal.

Les caractéristiques du point de fonctionnement optimal vont être présentées dans la suite.

Un générateur solaire étant constitué d'un assemblage de cellules solaires identiques selon un réseau formé de m lignes renfermant chacune n cellules en série, la caractéristique électrique d'un générateur solaire est une image du comportement électrique d'une cellule.

Une cellule est définie par 4 paramètres électriques, le courant de court circuit $i_{SC}$, la tension en circuit ouvert $v_{OC}$ et les coordonnées courant-tension du point optimal appelé MPP soit $i_{MP}$ et $v_{MP}$. Ces paramètres sont donnés dans des conditions standardisées d'éclairement et d'une température $T_0$ en début de vie. Ils sont donc susceptibles d'évoluer en fonction de la température T de la cellule de sorte que :

$$
\begin{aligned}
i_{SC}(T) &= i_{SC}(T_0) + (T - T_0)\frac{di_{SA}}{dT} \\[2mm]
v_{OC}(T) &= v_{OC}(T_0) + (T - T_0)\frac{dv_{OC}}{dT} \\[2mm]
i_{MP}(T) &= i_{MP}(T_0) + (T - T_0)\frac{di_{MP}}{dT} \\[2mm]
v_{MP}(T) &= v_{MP}(T_0) + (T - T_0)\frac{dv_{MP}}{dT}
\end{aligned}
\qquad (2.1)
$$

La cellule est également décrite par ses paramètres mécaniques, longueur L, largeur l et épaisseur e. La puissance $P_S$ reçue par la cellule sera proportionnelle à sa surface S soit :

$$
P_S = \frac{P_0}{Ll} \qquad (2.2)
$$

où $P_0$ est la puissance par m$^2$ fournie par le soleil, soit 1230 W/ m$^2$ ,ou la source lumineuse. La cellule transforme cette puissance lumineuse en puissance électrique $P_{MP}$ avec un rendement η tel que:

$$
\eta = \frac{v_{MP}(T)i_{MP}(T)}{P_S} = \frac{P_{MP}}{P_S} \qquad (2.3)
$$

Les caractéristiques électriques d'une cellule solaire correspondent aux évolutions du courant $i_{SA}$ et de la puissance $P_{SA}$ délivrés par celle-ci en fonction de la tension $v_{SA}$ à ses bornes. La modélisation du comportement électrique de la cellule a été étudiée par Tada et Carter. Elle correspond aux relations suivantes :

$$
\begin{aligned}
i_{SA}(t) &= i_{SC}(t) - i_R(\exp(\frac{qv_{SA}(t)}{AkT}) - 1) \\[2mm]
P_{SA}(t) &= v_{SA}(t)i_{SA}(t)
\end{aligned}
\qquad (2.4)
$$

où $i_R$ est le courant de saturation de la jonction entre semi conducteurs et A un paramètre qui définit les influences des phénomènes de diffusion et de recombinaison. Ce coefficient varie entre 0,5 et 2,5. Le coefficient kT/q a pour valeur 0,02596125 à 28°C.

Sur la figure 2 sont représentées les évolutions de $i_{SA}(v_{SA})$ et $P_{SA}(v_{SA})$ à un instant t où les conditions d'éclairement et de température sont définies pour une cellule caractérisée par ses paramètres mesurés dans des conditions standardisées.

La caractéristique i$_{SA}$(v$_{SA}$), référencée 5 sur la figure 2, est une fonction continue, correspondant à une fonction exponentielle et dont la dérivée est toujours négative. La caractéristique P$_{SA}$(V$_{SA}$), référencée 6 sur la figure 2, par contre, présente un maximum à la tension v$_{MPP}$ qui correspond à la tension du point optimal MPP. Le courant de la cellule qui lui est associé est i$_{MPP}$. La même approche peut se faire en sélectionnant les caractéristiques v$_{SA}$(i$_{SA}$) et P$_{SA}$(i$_{SA}$), ce qui conduit à identifier les coordonnées du point optimal à partir des relations

$$\frac{dP}{dv_{SA}} = \frac{dP}{di_{SA}} = 0 \qquad (2.5)$$

soit encore

$$\frac{dv_{SA}}{di_{SA}} = 1 \qquad (2.6)$$

Les propriétés du point optimal se caractérisent donc par : les dérivées des points de fonctionnement situés à gauche du MPP sont positives tandis que celles des points situés à sa droite sont négatives.

Cette propriété peut être exploitée, lors d'un fonctionnement dynamique en observant que toute variation dv$_{SA}$ autour d'un point M à droite du MPP entraîne une variation di$_{SA}$ de même signe. Un changement de phase est introduit lorsque le point M se trouve à gauche du MPP.

Enfin la valeur absolue de la tangente à la caractéristique i$_{SA}$ (v$_{SA}$) au MPP est de 45° (π/4). A sa gauche sa valeur est comprise entre 0 et π/4. Elle est comprise entre π/4 et π/2 pour les points situés à droite du MPP.

A présent vont être décrits les principes de base du suivi du point de puissance dit MPPT.

La caractéristique I$_{SA}$ (V$_{SA}$) d'un générateur solaire de m lignes ou « strings » constituées chacune de n cellules en série, où R$_S$ est la résistance série de la cellule, est de la forme :

$$I_{SA} = m(i_{SC} - i_R(\exp(\frac{q}{nAkT}(V_{SA} + \frac{n}{m}R_S I_{SA}))-1)) \qquad (2.7)$$

Il est souvent utile d'avoir recours à la fonction inverse, ce qui conduit à exploiter la caractéristique V$_{SA}$ (I$_{SA}$) qui s'exprime par :

$$V_{SA} = \frac{nAkT}{q}Log(1+ \frac{i_{SC} - \frac{I_{SA}}{m}}{i_R}) - \frac{n}{m}R_S I_{SA} \qquad (2.8)$$

La puissance instantanée P$_{SA}$(t) du générateur solaire résulte du produit de la tension instantanée V$_{SA}$(t) et du courant instantané I$_{SA}$(t) mesurés à l'instant t soit :

$$P_{SA}(t) = V_{SA}(t)I_{SA}(t) \qquad (2.9)$$

La polarisation du générateur solaire à son MPP implique la connaissance des coordonnées de ce point. La détermination de ce point n'est possible qu'en exploitant les propriétés du MPP. Si on élimine les concepts basés sur l'utilisation de convertisseurs DC/DC conventionnels dont l'asservissement est basé sur le calcul de la tangente à la caractéristique I$_{SA}$ (V$_{SA}$) et son verrouillage à la valeur π/4, le principe général de recherche du MPP, repose sur la différentiation de (2.9) , soit :

$$dP_{SA}(t) = I_{SA}(t)dV_{SA}(t) + V_{SA}(t)dI_{SA}(t) \qquad (2.10)$$

La détermination du point de fonctionnement optimal revient à rechercher le maximum de la fonction P$_{SA}$(t) , c'est à dire la résolution de l'équation :

EP 1 400 886 A1

$$0 = I_{SA}(t)dV_{SA}(t) + V_{SA}(t)dI_{SA}(t) \qquad (2.11)$$

soit :

$$\frac{dV_{SA}(t)}{dI_{SA}(t)} = -\frac{V_{SA}(t)}{I_{SA}(t)} \qquad (2.12)$$

L'interprétation de cette relation indique que le MPP correspond à l'intersection de la droite de charge et de l'impédance différentielle du générateur.

Si la détermination de $I_{SA}$ et $V_{SA}$ est sans problème, il n'en est pas de même de l'impédance différentielle. Une manière de la mesurer consiste à passer par une différentiation dans le temps telle que :

$$\frac{dV_{SA}}{dI_{SA}} = \frac{\dfrac{dV_{SA}}{dt}}{\dfrac{dI_{SA}}{dt}} \qquad (2.13)$$

Le calcul de cette impédance revient à différentier les mesures de $I_{SA}$ et $V_{SA}$ déjà effectués pour l'évaluation de la droite de charge. La difficulté technique réside dans la gestion de la division de ces grandeurs. D'une manière générale, la résolution de (2.13) implique un algorithme de recherche dynamique appelé MPPT. Tous les systèmes MPPT connus diffèrent par le type d'algorithme employé. Ci-dessous sont cités ceux qui sont les plus utilisés et leurs inconvénients associés.

La recherche du MPP dans les asservissements utilisés actuellement repose sur une poursuite permanente de ce point au moyen d'une excitation imposée au générateur solaire avec l'objectif de le poursuivre avec un écart aussi faible que possible :

- le premier procédé est celui employant la détection du passage au MPP. C'est le procédé le plus utilisé. Il consiste à parcourir la caractéristique $P_S$ ($V_{SA}$) et à déceler l'instant du dépassement du MPP pour y revenir et l'encadrer. Deux méthodes peuvent notamment s'employer.

  cette détection du dépassement du MPP peut se faire par la détection de la puissance crête. Le principe, simple, fait appel à un processus d'échantillonnage. La puissance $P_S(t)$ demandée au générateur est progressivement perturbée, puis mise en mémoire à intervalles de temps régulier $T_S$. La comparaison des puissances $P_S$ $(t_1)$ et $P_S(t_2)$ entre 2 échantillons successifs pris aux instants $t_1$ et $t_2$, va permettre d'effectuer :

$$\frac{P_S(t_2) - P_S(t_1)}{t_2 - t_1} = \frac{dP_S}{dt} \qquad (2.14)$$

Si $dP_S/dt$ est positif, le point de fonctionnement est à gauche du MPP et le signe de la perturbation n'est pas modifié et doit évoluer vers des puissances croissantes demandées au générateur solaire. La détection de $dP_S/dt$ négatif indique que le MPP a été dépassé et le signe de l'excursion perturbatrice doit être inversé. La mise en mémoire de $P_S(t)$ est généralement réalisée par un bloqueur d'ordre zéro ou détecteur de crête. La perturbation est généralement réalisée avec une dent de scie qui agit sur un convertisseur DC/DC contrôlé en courant.

La détection du dépassement du MPP peut également s'effectuer par la détection de changement de phase. Dans ce cas, la perturbation est un signal sinusoïdal de fréquence $\omega$ appliqué à un convertisseur DC/DC et qui va moduler le point de fonctionnement du générateur solaire en y introduisant une variation sinusoïdale de faible amplitude. La mesure du courant $I_{SA}$ (t) va refléter cette perturbation avec un possible déphasage $\varphi$ de sorte que :

$$I_{SA}(t) = I_{SA}(0) + i\sin(\omega t + \varphi) \qquad (2.15)$$

La mesure de la tension $V_{SA}$ (t) va également refléter la modulation sinusoïdale. La comparaison des phases va permettre de situer la position du point de fonctionnement par rapport au MPP. Les phases seront identiques à droite du MPP et opposées à sa gauche.

- un second procédé consiste à détecter le passage au MPP par un processus logique. Cette approche est amenée à se développer grâce aux progrès réalisés dans le domaine des microprocesseurs. La méthode consiste à établir une table logique où les signes de grandeurs mesurées sont pris en compte pour orienter le sens de l'unité de poursuite MPPT. L'observation des caractéristiques $I_{SA}$ ($V_{SA}$) et $P_S$ ($V_{SA}$) permet de constater que, si le point de fonctionnement est à gauche du MPP, alors pour toute perturbation de durée dt:

$$signe \ \frac{dP_S}{dt} \ = \ signe \ \frac{dV_{SA}}{dt} \qquad (2.16)$$

Le point de fonctionnement sera à droite du MPP si, au contraire

$$signe \ \frac{dP_S}{dt} \ = \ -signe \ \frac{dV_{SA}}{dt} \qquad (2.17)$$

Il s'ensuit qu'un signal s(t) permettant d'orienter le sens d'une excursion peut être généré en activant un convertisseur DC/DC selon le signe de :

$$\frac{dP_S}{dt}\frac{dV_{SA}}{dt} \ = \ s(t) \qquad (2.18)$$

Si s(t)>0 le point de fonctionnement M est tel que $V_M < V_{MPP}$, le convertisseur DC/DC sera désactivé pour permettre au potentiel du générateur solaire d'augmenter. Lorsque s(t)<0, le point de fonctionnement du générateur solaire a passé le MPP et le convertisseur DC/DC peut être activé de nouveau. Cette approche ne nécessite pas le support d'un échantillonnage.

Ces différents procédés de résolution du MPPT souffrent d'inconvénients notables.

- L'inconvénient majeur de ces procédés est la nécessité d'insérer entre le générateur solaire et le réseau d'utilisation, des unités permettant des évolutions indépendantes de leurs potentiels. En effet, pour permettre au générateur solaire d'opérer à son MPP, il est obligatoire de donner à ce dernier toute liberté d'évolution à son point de fonctionnement. Ceci est d'autant plus important qu'une excitation de ce point est faite de façon permanente par un algorithme de recherche MPPT. Les mesures effectuées vont permettre d'encadrer le MPP et de faire évoluer la tension du générateur solaire autour de ce MPP. De même, la tension du réseau est soumise à des contraintes différentes qui lui imposent soit d'être à une tension régulée $V_o$ différente de celle du MPP, soit d'être à la tension batterie $V_B$ qui doit évoluer librement selon qu'elle est en charge ou en décharge. Une conséquence de l'obligation d'insérer des régulateurs entre le GS et le réseau est la contribution massique et le prélèvement énergétique de ces unités tampons. En effet, toute la puissance maximale du générateur solaire est appelée à transiter par ces unités. La pénalisation massique est de l'ordre de 3gr/W, ce qui porte à 30 Kg la masse d'une telle unité pour un satellite nécessitant une puissance de 10 kW. Du point de vue du rendement, ces unités prélèvent en permanence une contribution d'environ 7 à 10% de la puissance en transit. Les conséquences sont doubles : d'abord, un accroissement des performances du GS en masse, volume et puissance d'environ 10%, ensuite l'évacuation de la puissance dissipée par les régulateurs, de l'ordre du KW pour un GS de 11 KW, qui va entraîner l'utilisation de caloducs avec ses contraintes massiques et énergétiques.
- Dans le cas des processus de recherche permanente, l'inconvénient majeur réside dans la nécessité même d'une recherche permanente, comme son nom l'indique. La détection du MPP passe obligatoirement par un processus dynamique qui provoque un déplacement du point de fonctionnement du générateur solaire de façon à mesurer ce déplacement et l'orienter vers le MPP. La détection du MPP n'est réalisée que lors de son dépassement. L'asservissement du convertisseur DC/DC ne peut se fixer sur le MPP, il oscille constamment autour de ce dernier qui devient une position d'équilibre, jamais atteinte.
- En outre, quelque soit l'algorithme de recherche utilisé, la détection du MPP implique les mesures instantanées de $I_{SA}(t)$ et $V_{SA}(t)$ et surtout la réalisation soit du produit $I_{SA}(t)V_{SA}(t)$ pour mettre en évidence $P_S(t)$ soit de rapports tels que $V_{SA}(t)/ I_{SA}(t)$ ou $dV_{SA}(t)/ dI_{SA}(t)$ pour la détermination des impédances différentielles et de charge.

La mise en oeuvre de ces fonctions non linéaires doit se faire de façon analogique car elles interviennent dans la boucle de régulation du convertisseur DC/DC. Les circuits intégrés qui réalisent ces opérations ont une précision variable selon leurs plages de fonctionnement et exigent des signaux appairés d'un point de vue grandeur.

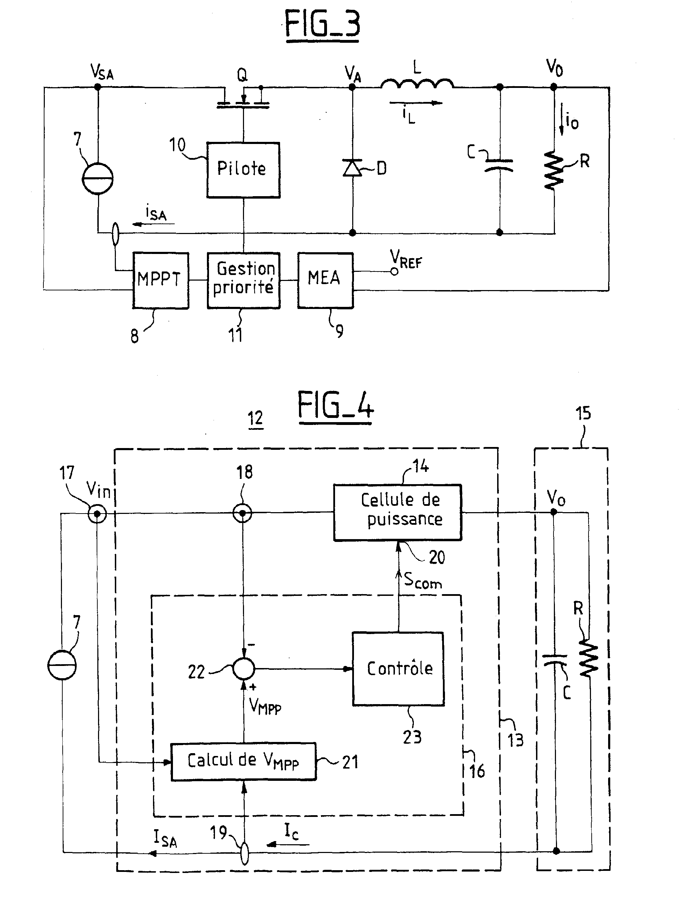

La polarisation d'un générateur solaire autour de son MPP met en oeuvre un ensemble dont l'organisation fonctionnelle est donnée sur la figure 3. Il se caractérise par un générateur solaire 7 dont les paramètres instantanés

$V_{SA}$(t)et $I_{SA}$(t) sont captés et transmis à une unité de gestion MPPT, référencée 8. Le générateur solaire est connectée à une cellule de puissance, de type buck dans cet exemple, qui est chargée de transférer la puissance $P_S$(t) à un réseau d'utilisation RC selon une tension régulée $V_0$. Le rôle de la cellule de puissance est d'isoler le générateur du réseau et lui permettre d'évoluer de façon optimale avec un excellent rendement énergétique. La tension du réseau est asservie à la valeur $V_0$ par une boucle d'asservissement dite de détection d'erreur principale ou MEA (pour "Main Error Amplifier" en anglais) qui compare la tension $V_0$ à une tension de référence $V_{REF}$. L'interrupteur Q de la cellule de puissance est piloté en mode PWM ("Pulse Width Modulation" en anglais) par un module fonction pilote "Driver" 10, commandé lui-même par une unité de Gestion Priorité 11 qui interface les deux boucles d'asservissement MPPT et MEA.

Cette fonction de Gestion Priorité assure la polarisation du générateur solaire (GS) autour du MPP, si la demande en puissance du réseau l'exige, en asservissant la tension $V_{SA}$ à la valeur $V_{MPP}$ +/-dV, c'est à dire en obligeant la cellule de puissance à asservir sa tension d'entrée. La tension de sortie n'est plus asservie à $V_0$ et peut donc s'écarter de cette valeur. La priorité d'asservissement est donnée à la boucle MPPT.

Dès que la demande de puissance du réseau décroît et ne nécessite plus une polarisation du GS au MPP, la boucle MPPT est désactivée et la boucle MEA reprend son service. La tension de sortie de la cellule de puissance est de nouveau régulée.

La fonction MPPT est donc une boucle d'asservissement qui s'intègre dans le fonctionnement d'une cellule de puissance et devient prioritaire sur la fonction d'asservissement conventionnel MEA de cette unité. Une fonction de sélection des priorités est donc nécessaire pour définir la boucle prioritaire. Le problème qui réside dans ce dernier art antérieur est donc celui des interférences des asservissements.

La présente invention a donc pour objectif celui de remédier aux inconvénients cités ci-dessus.

L'invention a notamment pour but de proposer un circuit de conditionnement d'une source de puissance permettant une polarisation de celle-ci à son MPP par le biais d'un asservissement comportant une boucle de régulation unique, sans avoir recours à des algorithmes de recherche permanente qui ne permettent que d'encadrer le MPP.

A cet effet, l'invention a pour objet un circuit de conditionnement pour une source de puissance pour laquelle le graphe de la puissance fournie en fonction de la tension aux bornes de la source présente un maximum, le circuit de conditionnement comprenant

- une cellule de puissance avec une entrée pour l'alimentation par la source de puissance et une sortie pour alimenter une charge,
- un circuit de commande de la cellule de puissance par un signal de commande appliquée à la cellule de puissance de manière à asservir la tension d'entrée de ladite cellule,

caractérisé en ce que, la caractéristique courant-tension de la source de puissance étant une fonction exponentielle, le circuit de commande comporte :

- des moyens de calcul comprenant des moyens de réception de mesures instantanées de points de ladite caractéristique, et un programme apte à déterminer l'équation de la caractéristique selon une première méthode prédéterminée à partir de quatre points de la caractéristique, et apte à déterminer selon une seconde méthode ledit maximum pour servir de référence de fonctionnement,
- des moyens de contrôle pour fournir le signal de commande représentatif de la différence entre d'une part la tension de référence recherchée calculée par le module de calcul et d'autre part la tension instantanée en sortie de la source de puissance de manière à annuler le signal de commande.

Ainsi, l'invention part astucieusement et de façon inventive du théorème suivant : "Une fonction exponentielle est entièrement définie par la connaissance de 4 de ses points".

Grâce à l'invention, les moyens de calcul capturent les mesures de coordonnées instantanées courant-tension de 4 points de la caractéristique $I_{SA}(V_{SA}$(t)) de la source de puissance et génère précisément la tension de référence $V_{MPP}$ sur laquelle la tension de sortie de la source de puissance se cale par un asservissement unique.

Il faudra noter que l'invention permet de polariser une source de puissance, telle qu'un générateur solaire, à son MPP par un asservissement classique nullement basé sur un algorithme de recherche (ou "tracking" en anglais) quel qu'il soit, analogique, numérique, digital, logique etc, qui fait usuellement osciller l'organe de puissance (régulateur, convertisseur) autour de ce point sans pouvoir s'y fixer.

Au contraire, selon l'invention, le fait d'obtenir les coordonnées du MPP, par un calcul indépendant du fonctionnement de l'asservissement et agissant sur ce dernier par un signal de référence, permet d'utiliser ce principe sur tous les types de convertisseurs, régulateurs existant ou à venir.

Selon un mode de réalisation, la caractéristique courant-tension de la source de puissance étant de la forme :

$$i = i_{SC} - i_R(\exp(av) - 1),$$

ladite première méthode est destinée à déterminer les paramètres de cette dernière équation selon les relations suivantes :

$$a = \frac{1}{v_1 - v_2} Log(\frac{di_1}{di_2}\frac{dv_2}{dv_1})$$

$$i_R = -\frac{di}{dv}\frac{1}{a\exp(av)}$$

$$i_{SC} = i - i_R (\exp(av) - 1).$$

Selon un mode de réalisation, ladite seconde méthode destiné à déterminer ledit maximum utilise la méthode de Newton-Raphson à partir de l'équation de la caractéristique.

Selon un mode de réalisation, le circuit comporte un capteur de courant apte à fournir le courant instantané de façon régulière et en ce que le module de calcul est apte à déclencher ledit programme dès que la variation courante entre le courant instantané et le courant dépasse un seuil prédéterminé.

Selon un mode de réalisation, le circuit de commande comporte un sommateur comparant la tension instantanée en sortie de la source et la tension générée par les moyens de calcul, l'additionneur délivrant en sortie un signal représentatif de la différence entre ces dernières grandeurs en entrée des moyens de contrôle.

L'invention a également pour objet un générateur solaire, comprenant une source de puissance pour laquelle le graphe de la puissance fournie en fonction de la tension aux bornes de la source présente un maximum, caractérisé en ce que qu'il est destiné à être conditionné par un circuit selon l'invention.

L'invention a encore pour objet un procédé de conditionnement par un circuit de conditionnement d'une source de puissance pour laquelle le graphe de la puissance fournie en fonction de la tension aux bornes de la source présente un maximum, le circuit de conditionnement comprenant :

- une cellule de puissance avec une entrée pour l'alimentation par la source de puissance et une sortie pour alimenter une charge,
- un circuit de commande de la cellule de puissance par un signal de commande appliquée à la cellule de puissance de manière à asservir la tension d'entrée de ladite cellule,

caractérisé en ce que, la caractéristique courant-tension de la source de puissance étant une fonction exponentielle, le procédé de conditionnement comporte :

- une étape de détermination de l'équation de ladite caractéristique courant-tension selon une première méthode prédéterminée à partir de quatre points de la caractéristique,
- une étape de détermination selon une seconde méthode dudit maximum pour servir de référence de fonctionnement,
- une étape de transmission du signal de commande représentatif de la différence entre la référence calculée et la tension instantanée en sortie de la source de puissance de manière à annuler le signal de commande.

Selon un mode de réalisation, la caractéristique courant-tension de la source de puissance étant de la forme :

$$i = i_{SC} - i_R(\exp(av) - 1),$$

ladite première méthode est destinée à déterminer les paramètres de cette dernière équation selon les relations suivantes :

$$a = \frac{1}{v_1 - v_2} Log(\frac{di_1}{di_2}\frac{dv_2}{dv_1}$$

$$i_R = -\frac{di}{dv}\frac{1}{a\exp(av)}$$

$$i_{SC} = i - i_R \,(\exp(av) - 1).$$

Selon un mode de réalisation, ladite seconde méthode destiné à déterminer ledit maximum utilise la méthode de Newton-Raphson à partir de l'équation de la caractéristique.

Selon un mode de réalisation, le circuit de conditionnement comportant un capteur de courant apte à fournir le courant instantané de façon régulière, le procédé déclenche ledit programme dès que la variation courante entre le courant instantané et le courant correspondant au point maximum dépasse un seuil prédéterminé.

Selon un mode de réalisation, le programme utilise comme base des quatre points de la caractéristique, le précédent maximum, les trois autres étant obtenus par application d'échelons successifs de tension en sortie des moyens de calcul et par sondage des intensités correspondantes.

D'autres caractéristiques et avantages de l'invention apparaîtront à la lecture de la description qui suit des modes de réalisation suivants, donnés à titre d'exemple et en référence aux dessins, qui montrent :

- figure 1 : un graphe du courant et de la puissance en fonction de la tension aux bornes d'une source de puissance ;
- figure 2 : les évolutions de $i_{SA}(v_{SA})$ et $P_{SA}(v_{SA})$ à un instant t où les conditions d'éclairement et de température sont définies pour une cellule caractérisée par ses paramètres mesurés dans des conditions standardisées ;
- figure 3: la représentation fonctionnelle d'un système polarisant un générateur solaire selon l'art antérieur,
- figure 4 : la représentation schématique d'un système incorporant une source de puissance et un circuit de conditionnement de puissance associé selon un mode de réalisation de l'invention,
- figure 5: un tableau de vérification expérimentale du principe selon l'invention,
- figure 6 : une représentation schématique d'un circuit de conditionnement de puissance selon l'invention adapté pour un système de puissance S4R,
- figure 7 : le circuit de conditionnement de puissance de la topologie de la figure 6 dans une version à n modules S4R.

Dans la présente demande, des éléments remplissant des fonctions identiques ou similaires porteront des mêmes références.

La figure 4 est une représentation schématique d'un système 12 incorporant une source de puissance, en l'occurrence un générateur solaire 7, et un circuit 13 de conditionnement de puissance selon un mode de réalisation de l'invention, dans une application à l'alimentation d'une charge RC. L'application pourrait bien sûr être tournée vers l'alimentation d'un bus de tension d'un satellite. Le circuit de conditionnement permet au générateur conditionné de délivrer une puissance sous une tension fixe V0, autrement dit de se comporter comme une source de tension. Ce circuit de conditionnement permet aussi de maximiser la puissance fournie par le générateur solaire.

La figure 4 montre que la tension Vin aux bornes du générateur solaire est appliquée en entrée d'une cellule de puissance 14 et est asservie à la tension MPP (qui peut être un convertisseur continu/continu ou DC/DC).

La tension V0 en sortie de la cellule de puissance 14 est appliquée à une charge RC 15 ; celle-ci comprend habituellement une batterie alimentant les charges, mais ceci est sans incidence sur le fonctionnement du circuit.

La cellule de puissance 14 est commandée par un circuit de commande 16. Ce circuit de commande 16 comprend, comme il sera détaillé dans la suite, d'un contrôleur qui regroupe toutes les fonctions d'asservissement de la cellule de puissance et d'un module de calcul générant la tension MPP qui sera la référence de l'asservissement. Ce circuit de commande 16 reçoit en entrée la tension d'entrée Vin appliquée à la cellule 14 ainsi que le courant $I_{SA}$ de fonctionnement du générateur 7 ; la figure montre schématiquement les capteurs de tension 17 et 18 et le capteur de courant 19. Le circuit de commande 16 fournit un signal de commande Scom appliqué à l'entrée de commande de la cellule 14, comme représenté en 20 sur la figure.

Comme expliqué plus haut, la puissance fournie par le générateur solaire 7 est fonction de la tension Vin aux bornes du générateur ; la tension pour laquelle la puissance fournie est maximale peut varier dans une plage [V0min, V0max], dans l'exemple une plage de 40 à 80 V. Une solution courante est que le bus de tension du satellite fonctionne à une tension nominale de 28 V, qui varie entre 23 et 37 V en fonction de la charge alimentée par le bus de tension. En pratique, la tension nominale du bus est inférieure la borne inférieure V0min de la plage dans laquelle varie la tension pour laquelle la puissance fournie est maximale. Dans une telle configuration, la cellule de puissance peut être un convertisseur 14 de type convertisseur PWM (à modulation de la largeur d'impulsion), par exemple du type Buck. Ce convertisseur est particulièrement adapté à fonctionner avec une tension de sortie inférieure à la tension d'entrée. Le signal d'entrée est dans un tel cas un signal représentatif du rapport cyclique de modulation de la largeur d'impulsion.

La cellule de puissance, quelque soit sa topologie de toute façon, s'insère entre le générateur solaire et le réseau d'utilisation pour les isoler et permettre à leurs potentiels d'évoluer librement. Cette cellule de puissance est soumise à un asservissement, quelque soit son type, PWM, Hystérésis ou autre, généré par le circuit de commande 16 qui l'oblige à réguler sa tension d'entrée selon une référence qui n'est d'autre que la tension MPP, comme expliqué dans la suite.

L'objectif est de fournir une tension de référence qui soit la tension du MPP. Cette référence doit être une tension continue, stable et constamment représentative de l'évolution du MPP avec l'environnement et la température. Cette tension de référence est délivrée par le module de calcul 21 de $V_{MPP}$ du circuit de commande, situé hors de la boucle d'asservissement.

Il va être présenté à présent une des fonctions principales du circuit de commande qui est remplie par le module de calcul de $V_{MPP}$.

Cette fonction principale repose sur la modélisation de la cellule solaire et, par delà, du générateur solaire et du théorème suivant : « Une fonction exponentielle est entièrement définie par la connaissance de 4 de ses points ".

La fonction de calcul de $V_{MPP}$ est réalisée par le module 21, un microprocesseur par exemple, qui procède, pour chaque renouvellement de la tension $V_{MPP}$, aux mesures des coordonnées instantanées courant-tension de 4 points de la caractéristique $I_{SA}(V_{SA}(t))$ du générateur solaire et, par un calcul astucieux expliqué dans la suite, génère la tension de référence $V_{MPP}$.

La modélisation de la tension $V_{MPP}$ va être démontrée dans le cas d'une cellule solaire. La caractéristique i (v) d'une cellule à un instant t, en négligeant l'effet de la résistance série $R_S$ , est de la forme :

$$i = i_{SC} - i_R(\exp(av) - 1) \tag{4.1}$$

en posant, pour simplifier :

$$a = \frac{q}{AkT} \tag{4.2}$$

Il s'en déduit que :

$$\frac{di}{dv} = -i_R a\exp(av) \tag{4.3}$$

En disposant des mesures de positionnement de 4 points $M_1$ $M_2$ ,$M_3$ ,$M_4$ de la cellule solaire, il est possible d'évaluer les valeurs instantanées des paramètres a ,et $i_R$ et $i_{SC}$. Soit :

$$\frac{\frac{di_1}{dv_1}}{\frac{di_2}{dv_2}} = \frac{\exp(av_1)}{\exp(av_2)} = \exp(a(v_1 - v_2)) \tag{4.4}$$

D'où:

$$a = \frac{1}{v_1 - v_2} Log(\frac{di_1}{di_2}\frac{dv_2}{dv_1})$$
$$i_R = -\frac{di}{dv}\frac{1}{a\exp(av)} \tag{4.5}$$
$$i_{SC} = i - i_R(\exp(av) - 1)$$

Il est à remarquer que l'évaluation de $i_R$ fait appel à l'un quelconque des 4 points. Une valeur moyenne peut améliorer la précision du calcul de ce paramètre. Les évaluations de ces 2 paramètres permettent la modélisation de la caractéristique électrique de la cellule de puissance. En particulier, elles donnent accès à la détermination du MPP. En effet, ce point est relié au calcul de la dérivée de la puissance P, soit :

$$\frac{dP}{di} = \frac{AkT}{q}(Log(\frac{i_{SC} - i}{i_R}) - \frac{i}{i_R}\frac{1}{1 + \frac{i_{SC} - i}{i_R}}) \qquad (4.6)$$

La condition du maximum dP/dv=0 permet d'écrire la relation qui va donner accès à $i_{MPP}$ soit :

$$Log\frac{i_{SC} - i_{MPP}}{i_R} = \frac{i_{MPP}}{i_R}\frac{1}{1 + \frac{i_{SC} - i_{MPP}}{i_R}} \qquad (4.7)$$

La résolution de cette équation se fait rapidement par la méthode de Newton-Raphson, en réalisant un petit nombre i d'itérations à partir d'une valeur i(j) proche de la valeur $i_{MPP}$ calculée lors du cycle précédent. On pose :

$$i_{MPP} = i^{(j+1)} = i^{(j)} - \frac{f(i^{(j)})}{\frac{df^{(j)}}{di}} \qquad (4.8)$$

en posant :

$$f(i) = Log\frac{i_{SC} - i}{i_R} - \frac{i_{MPP}}{i_R}\frac{1}{1 + \frac{i_{SC} - i}{i_R}} \qquad (4.9)$$

et

$$\frac{df}{di} = -\frac{2}{i_{SC} - i} + \frac{i}{(i_{SC} - i)^2} \qquad (4.10)$$

Le calcul de la valeur de la référence est immédiat, soit:

$$v_{MPP} = \frac{1}{a}Log(1 + \frac{i_{SC} - i_{MPP}}{i_R}) \qquad (4.11)$$

Ainsi, grâce à l'invention, à partir de la mesure de 4 points de la caractéristique courant-tension du générateur, on génère astucieusement le point MPP déterminé par $V_{MPP}$.

Le module de calcul a pour fonctions de recueillir les mesures de 4 points courants de la caractéristique électrique i(v) d'un générateur solaire et de réaliser "off line" les calculs intermédiaires des paramètres a, $i_R$ et $i_{SC}$, les itérations de la méthode de Newton-Raphson pour le calcul de $v_{MPP}$ puis la génération de la référence $v_{MPP}$ pour l'asservissement de l'organe de puissance choisi.

La qualité d'un asservissement au MPP implique un suivi permanent de l'évolution des performances du générateur solaire. Cette procédure de mesures et de calculs doit être renouvelée chaque fois que le MPP a évolué.

Ce suivi du MPP n'exige pas le support d'un algorithme de recherche basé sur un système échantillonné dans un fonctionnement oscillatoire permanent à fréquence fixe ou variable. En effet, la connaissance des coordonnées du MPP ($i_{MPP}$ et $v_{MPP}$) pour commander la régulation de la tension $v_{MPP}$ du générateur solaire, permet, en permanence, de mettre en évidence toute variation $\Delta i_{MPP}$ supérieure à une valeur prédéterminée, puisque le courant i(t) est mesuré en permanence ($I_{SA}$). Dès que ce seuil est atteint, le signal déclenchant la procédure est générée. Tant que ce seuil n'est pas atteint, la référence de l'asservissement demeure constante et il en est de même de la tension du générateur solaire.

Le signal de déclenchement de la procédure implique la connaissance du courant $i_1$ au point $M_1$ qui est l'ancien MPP. Ce point est donc immédiatement disponible. L'obtention des 3 autres points peut se réaliser en appliquant successivement un échelon $\Delta V_{MPP}$, puis 2 et 3 à la référence $V_{MPP}$ et capter les courants $i_2$, $i_3$, $i_4$ correspondants.

La figure 4 montre un exemple de réalisation du circuit de commande 16. Le module de calcul 21 capte la tension Vin au moyen du capteur de tension 17 et le courant instantané $I_{SA}$ par le capteur de courant 19. ). Selon que le seuil mentionné ci-dessus est atteint ou non, le déclenchement de la procédure de calcul de la nouvelle référence $V_{MPP}$ est amorcé ou non. Tant que ce seuil n'est pas atteint, la référence de l'asservissement demeure constante et il en est de même de la tension du générateur solaire. Dès que ce seuil est atteint, la procédure est enclenchée. La méthode de calcul de la nouvelle référence $V_{MPP}$ est enclenchée telle que décrite ci-dessus. Un sommateur 22 fournit en sortie un signal représentatif de la différence entre la nouvelle référence $V_{MPP}$ fournie par le module de calcul et la tension instantanée $V_{IN}$ en sortie du générateur et fournie par le capteur de tension 18. Le signal fourni par le sommateur est appliqué à une entrée du contrôleur 23 dont le rôle est d'annuler la consigne Scom. Le signal de sortie du contrôleur forme le signal de sortie du circuit de commande 16.

Il faut souligner qu'un avantage immédiat et important de l'application de ce principe est qu'il s'applique à toutes les topologies de cellules de puissance, quelles qu'elles soient, séries ou shunt, PWM, quasi résonnantes, S3R ou S4R et quelque soient leurs contrôles, PWM, Hystérésis, en modes tension ou courant. La seule condition est de réguler la tension du générateur solaire à partir d'une tension de référence prédéterminée. La détermination de la tension de référence $v_{MPP}$ ne fait pas partie de l'organisation fonctionnelle de la cellule de puissance. Elle est indépendante de la boucle d'asservissement. Elle est interprétée par cette dernière comme un signal de commande. Elle est générée par une fonction autonome remplie par le module de calcul $V_{MPP}$, qui va se substituer ou non à la tension de référence du régulateur sans altérer son concept.

Le module de calcul $V_{MPP}$ est donc une fonction extérieure à la cellule de puissance (convertisseur ou régulateur). Elle ne modifie pas son fonctionnement. Il peut s'y appliquer à tout moment selon le choix du concepteur. C'est une fonction standardisable qui peut faire l'objet d'un ASIC ou autre choix technologique.

Ce principe de polarisation d'un générateur solaire à son MPP n'est devenu possible que grâce aux progrès de la technologie qui permet d'incorporer un microprocesseur autonome pour des opérations lentes et peu répétitives dans un système de puissance.

On notera également que ce principe est amené à modifier le comportement des concepteurs de systèmes de puissance car il permet d'associer tous les concepts actuels de systèmes de puissances (bus régulés S3R, S4R, Hybrid ou bus non régulés) avec le principe de fonctionnement d'un générateur solaire à son MPP.

Tous ces concepts de systèmes de puissances sont basés sur l'utilisation de régulateurs shunts connectés sur des sections de générateur solaire dans le but de renvoyer dans l'espace l'énergie excédentaire à l'utilisation en court-circuitant certaines sections. Le générateur voit donc sa tension imposée par des asservissements divers (BCR pour "Battery Discharge Regulator" et BDR pour "Battery Charge Regulator", en anglais) situés dans le circuit de conditionnement de puissance (PCU pour "Power Conditioning Unit" en anglais), soit à une tension régulée imposée $V_0$ dès la conception dans les concepts à bus régulé, ou bien à la tension batterie $V_B$ dans les concepts à bus non régulé. Il ne peut donc évoluer à son MPP. C'est pour éviter ce couplage que les principes MPPT actuels insèrent des régulateurs série entre le générateur solaire et le bus ou la batterie.

Le principe proposé, en remplaçant la tension de référence dans le PCU par la référence $v_{MPP}$, remplace la tension régulée $V_0$ par la tension régulée $V_{MPP}$. Le principe de fonctionnement du PCU modifié reste identique mais il permet maintenant d'exploiter la puissance maximale du générateur.

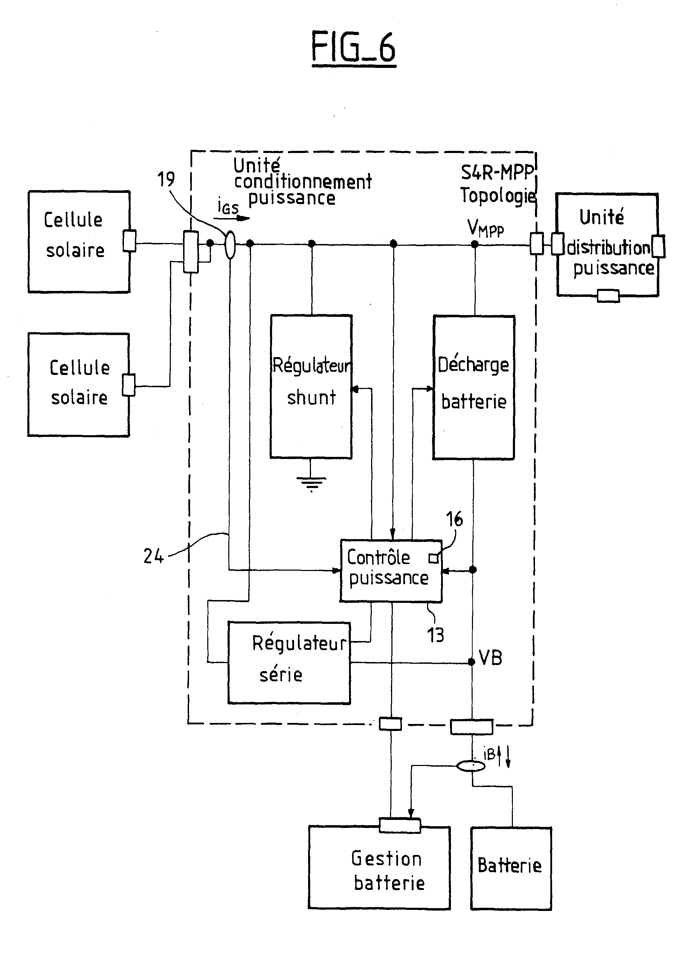

Le cas le plus intéressant est celui qui concerne le système de puissance S4R. Le PCU d'un tel système est illustré sur la figure 6. Elle diffère de la topologie S4R par le fait que, dans le système de conditionnement de puissance de l'invention, la référence du MEA a été remplacée par le module de calcul $V_{MPP}$ et qu'une mesure du courant GS est réalisée en permanence au moyen de la liaison 24 et le capteur 19.

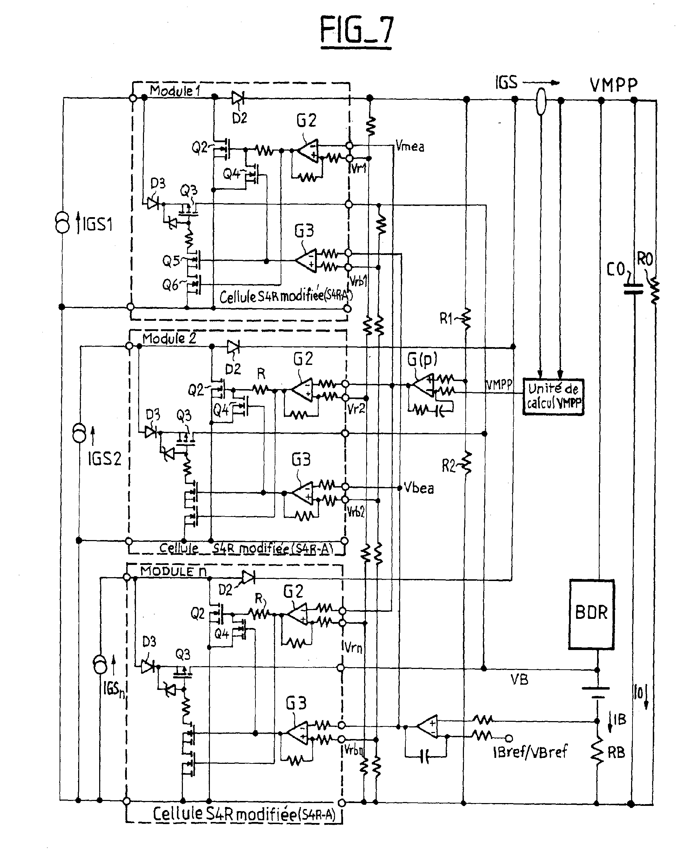

D'un point de vue pratique, l'intérêt du principe est plus explicite si l'on considère le fonctionnement des sections S4R. Le circuit de conditionnement de puissance d'une telle topologie est détaillé en figure 7 dans une version à n modules S4R. On remarque que la tension du réseau est la tension du MPP, reconstruite à partir de 4 mesures de tension et courant avec le module de calcul $V_{MPP}$. La tension de référence $V_{MPP}$ est appliquée à un comparateur G(p) qui distribue, après comparaison avec la tension réseau, à l'ensemble des modules S4R et BDR un signal de commande $V_{MEA}$. Si toute la puissance fournie par le GS n'est pas nécessaire, un certain nombre de sections shunt $Q_2$ sont activées. La charge de la batterie est réalisée en prélevant la puissance non utilisée en activant des interrupteurs série $Q_3$ dont le nombre est déterminé par un asservissement dont le signal de commande $V_{BEA}$ est généré par un comparateur $Q_B(p)$ mesurant le courant batterie et le comparant à une référence.

Cette topologie est particulièrement adaptée aux futurs satellites de fortes puissances (dans la gamme 10 à 100 kW) car elle utilise la puissance maximale du générateur solaire et supprime les chargeurs de batterie, unités volumineuses, pesantes et dissipant de l'énergie. Le coût financier peut se mesurer à la suppression de ces unités et à la réduction du générateur solaire.

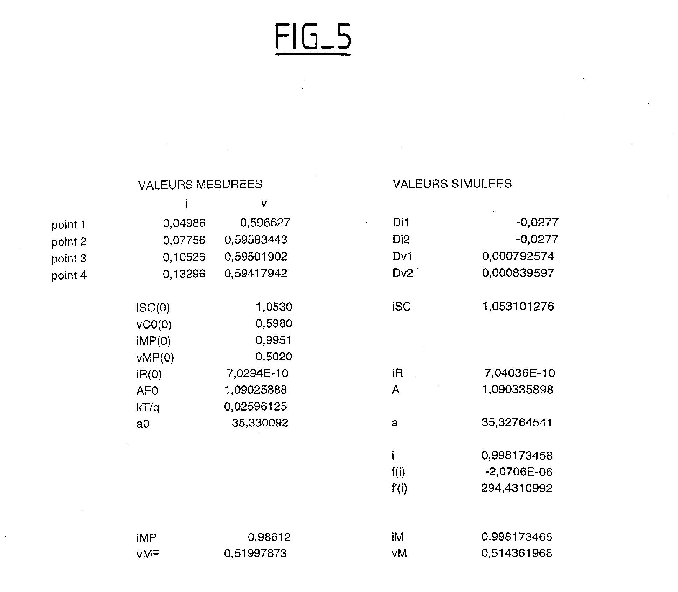

La vérification expérimentale de l'invention a été faite avec un tableur en sélectionnant une cellule solaire silicium de haute efficacité dont les paramètres électriques sont détaillés sur la partie gauche du tableau de la figure 5.

Un ensemble de 4 points ont été sélectionnés pour établir la caractéristique électrique de la cellule par simulation, à partir du modèle de Tada et Carter. Ces points ont été choisis, distants les uns des autres pour vérifier la validité du modèle. Leurs coordonnés i(t) et v(t) sont sur la partie gauche du tableau.

Le tracé de la caractéristique donne un MPP dont les coordonnées figurent au bas de la partie gauche du tableau. Le courant au MPP est de 0,986 A avec une tension de 0,519 V.

A partir des 4 points $M_1$ , $M_2$ , $M_3$ , $M_4$ choisis, les écarts $Di_1$ , $Di_2$ , $Di_3$ , $Di_4$ et $Dv_1$ , $Dv_2$ , $Dv_3$ , $Dv_4$ nécessaires aux calculs des paramètres a, $i_R$ et $i_{SC}$ sont évalués. Les valeurs théoriques de ces paramètres sont sur la partie droite du tableau en vis à vis des valeurs mesurées. Le calcul de $i_{MPP}$ par la méthode de Newton-Raphson est également donnée avant le calcul des coordonnées du MPP. La simulation aboutit à $i_{MPP}$ égal à 0,998 A et $v_{MPP}$ égal à 0,514 V, soit une précision de quelques pour cent au pire des cas.

De même, les caractéristiques, non représentées, v(i) et P(v) expérimentales et reconstruites à partir de 4 points mesurés selon le principe de l'invention, montre une correspondance d'excellente fiabilité, notamment aux alentours du MPP, où l'erreur est inférieure à 1 %.

Bien entendu, l'invention n'est pas limitée aux modes de réalisation décrits dans la présente demande.

Ainsi, l'implantation des moyens de calcul permettant de générer les coordonnées du MPP importe peu. Ceux-ci peuvent être incorporés dans l'unité de puissance, au même titre que la diode Zener qui fixe la tension à asservir dans un régulateur.

**Revendications**

1. Circuit de conditionnement pour une source de puissance (7) pour laquelle le graphe de la puissance (P) fournie en fonction de la tension (v) aux bornes de la source présente un maximum (MPP), le circuit (13) de conditionnement comprenant :

   - une cellule de puissance (14) avec une entrée pour l'alimentation par la source de puissance et une sortie pour alimenter une charge (15),
   - un circuit de commande (16) de la cellule de puissance par un signal de commande (Scom) appliquée à la cellule de puissance de manière à asservir la tension d'entrée de ladite cellule,

   **caractérisé en ce que**, la caractéristique courant-tension (i(v),2,4) de la source de puissance étant une fonction exponentielle, le circuit de commande comporte :

   - des moyens de calcul comprenant des moyens de réception de mesures instantanées de points de ladite caractéristique, et un programme apte à déterminer l'équation de la caractéristique selon une première méthode prédéterminée à partir de quatre points de la caractéristique, et apte à déterminer selon une seconde méthode ledit maximum ($V_{MPP}$, $I_{MPP}$) pour servir de référence de fonctionnement,
   - des moyens de contrôle (23) pour fournir le signal de commande (Scom) représentatif de la différence entre d'une part la tension de référence recherchée ($V_{MPP}$) calculée par le module de calcul et d'autre part la tension instantanée ($V_{IN}$) en sortie de la source de puissance de manière à annuler le signal de commande (Scom).

2. Circuit selon la revendication 1, **caractérisé en ce que**, la caractéristique courant-tension de la source de puissance étant de la forme :

$$i = i_{SC} - i_R(\exp(av) - 1),$$

ladite première méthode est destinée à déterminer les paramètres de cette dernière équation selon les relations suivantes :

$$a = \frac{1}{v_1 - v_2} Log(\frac{di_1}{di_2}\frac{dv_2}{dv_1})$$

$$i_R = -\frac{di}{dv}\frac{1}{a\exp(av)}$$

$$i_{SC} = i - i_R(\exp(av) - 1).$$

**3.** Circuit selon la revendication 1 ou 2, **caractérisé en ce que** ladite seconde méthode destiné à déterminer ledit maximum ($V_{MPP}$,$I_{MPP}$) utilise la méthode de Newton-Raphson à partir de l'équation de la caractéristique.

**4.** Circuit selon l'une des revendications précédentes, **caractérisé en ce que** le circuit comporte un capteur de courant (19) apte à fournir le courant instantané i(t) de façon régulière et **en ce que** le module de calcul est apte à déclencher ledit programme dès que la variation courante entre le courant instantané i(t) et le courant ($I_{MPP}$) dépasse un seuil prédéterminé.

**5.** Circuit selon l'une des revendications précédentes, **caractérisé en ce que** le circuit de commande comporte un sommateur (22) comparant la tension instantanée ($V_{IN}$) en sortie de la source (7) et la tension ($V_{MPP}$) générée par les moyens de calcul (21), l'additionneur délivrant en sortie un signal représentatif de la différence entre ces dernières grandeurs en entrée des moyens de contrôle.

**6.** Générateur solaire, comprenant une source de puissance pour laquelle le graphe de la puissance fournie en fonction de la tension aux bornes de la source présente un maximum, **caractérisé en ce que** qu'il est destiné à être conditionné par un circuit selon l'une des revendications 1 à 5.

**7.** Procédé de conditionnement par un circuit (13) de conditionnement d'une source de puissance (7) pour laquelle le graphe de la puissance fournie en fonction de la tension aux bornes de la source présente un maximum, le circuit (13) de conditionnement comprenant :

- une cellule de puissance (14) avec une entrée pour l'alimentation par la source de puissance et une sortie pour alimenter une charge (15),
- un circuit de commande (16) de la cellule de puissance par un signal de commande (Scom) appliquée à la cellule de puissance de manière à asservir la tension d'entrée de ladite cellule,

**caractérisé en ce que**, la caractéristique courant-tension (i(v),2,4) de la source de puissance étant une fonction exponentielle, le procédé de conditionnement comporte :

- une étape de détermination de l'équation de ladite caractéristique courant-tension selon une première méthode prédéterminée à partir de quatre points de la caractéristique,
- une étape de détermination selon une seconde méthode dudit maximum ($V_{MPP}$,$I_{MPP}$) pour servir de référence de fonctionnement,
- une étape de transmission du signal de commande (Scom) représentatif de la différence entre la référence calculée ($V_{MPP}$) et la tension instantanée ($V_{IN}$) en sortie de la source de puissance de manière à annuler le signal de commande (Scom).

**8.** Procédé selon la revendication précédente, **caractérisé en ce que**, la caractéristique courant-tension de la source de puissance étant de la forme :

$$i = i_{SC} - i_R(\exp(av) - 1),$$

ladite première méthode est destinée à déterminer les paramètres de cette dernière équation selon les relations suivantes :

$$a = \frac{1}{v_1 - v_2} Log(\frac{di_1}{di_2} \frac{dv_2}{dv_1}$$

$$i_R = - \frac{di}{dv} \frac{1}{a \exp(av)}$$

$$i_{SC} = i - i_R(\exp(av) - 1).$$

**9.** Procédé selon l'une des revendications 7 à 8, **caractérisé en ce que** ladite seconde méthode destiné à déterminer ledit maximum ($V_{MPP}$,$I_{MPP}$) utilise la méthode de Newton-Raphson à partir de l'équation de la caractéristique.

**10.** Procédé selon l'une des revendications 7 à 9, **caractérisé en ce que**, le circuit de conditionnement comportant un capteur de courant (19) apte à fournir le courant instantané i(t) de façon régulière, le procédé déclenche ledit programme dès que la variation courante entre le courant instantané i(t) et le courant ($I_{MPP}$) correspondant au point maximum dépasse un seuil prédéterminé.

**11.** Procédé selon l'une des revendications 7 à 10, **caractérisé en ce que** le programme utilise comme base des quatre points de la caractéristique, le précédent maximum (MPP), les trois autres étant obtenus par application d'échelons ($\Delta V_{MPP}$) successifs de tension en sortie des moyens de calcul et par sondage des intensités ($i_2$, $i_3$, $i_4$) correspondantes.

EP 1 400 886 A1

FIG_1

FIG_2

16

## FIG_3

$V_{SA}$   Q   $V_A$   L   $V_0$

$i_L$   $i_0$

7

10  Pilote

D   C   R

$i_{SA}$

MPPT   Gestion priorité   MEA   $V_{REF}$

8   11   9

## FIG_4

12   15

17   18   14

$V_{in}$   Cellule de puissance   $V_0$

7   20

$S_{com}$   R

22   −   Contrôle   C

$V_{MPP}$   +   23   13

Calcul de $V_{MPP}$   21   16

$I_{SA}$   19   $I_c$

# FIG_5

| VALEURS MESUREES | | | VALEURS SIMULEES | |
|---|---|---|---|---|
| | i | v | | |
| point 1 | 0,04986 | 0,596627 | Di1 | -0,0277 |
| point 2 | 0,07756 | 0,59583443 | Di2 | -0,0277 |
| point 3 | 0,10526 | 0,59501902 | Dv1 | 0,000792574 |
| point 4 | 0,13296 | 0,59417942 | Dv2 | 0,000839597 |
| | | | | |
| iSC(0) | | 1,0530 | iSC | 1,053101276 |
| vC0(0) | | 0,5980 | | |
| iMP(0) | | 0,9951 | | |
| vMP(0) | | 0,5020 | | |
| iR(0) | | 7,0294E-10 | iR | 7,04036E-10 |
| AF0 | | 1,09025888 | A | 1,090335898 |
| kT/q | | 0,02596125 | | |
| a0 | | 35,330092 | a | 35,32764541 |
| | | | | |
| | | | i | 0,998173458 |
| | | | f(i) | -2,0706E-06 |
| | | | f'(i) | 294,4310992 |
| | | | | |
| iMP | | 0,98612 | iM | 0,998173465 |
| vMP | | 0,51997873 | vM | 0,514361968 |

# FIG_6

# FIG_7

**Office européen
des brevets**

**RAPPORT DE RECHERCHE EUROPEENNE**

Numéro de la demande

EP 03 29 2203

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 100 60 108 A (UNIV DRESDEN TECH) 27 juin 2002 (2002-06-27) * le document en entier * | 1-11 | G05F1/67 |
| A | EP 1 239 576 A (KASAI YUJI ;NAT INST OF ADVANCED IND SCIEN (JP)) 11 septembre 2002 (2002-09-11) * le document en entier * | 1-11 | |
| A | FR 2 819 653 A (CENTRE NAT RECH SCIENT) 19 juillet 2002 (2002-07-19) * abrégé * | 1-11 | |
| A | US 6 262 558 B1 (WEINBERG ALAN H) 17 juillet 2001 (2001-07-17) * abrégé * | 1-11 | |
| A | GOW J A ET AL: "A MODULAR DC-DC CONVERTER AND MAXIMUM POWER TRACKING CONTROLLER FORMEDIUM TO LARGE SCALE PHOTOVOLTAIC GENERATING PLANT" 8TH EUROPEAN CONFERENCE ON POWER ELECTRONICS AND APPLICATIONS. LAUSANNE, CH, SEPT. 7 - 9, 1999, EPE. EUROPEAN CONFERENCE ON POWER ELECTRONICS AND APPLICATIONS, BRUSSLS: EPE ASSOCIATION, BE, vol. CONF. 8, 7 septembre 1999 (1999-09-07), pages 1-8, XP000883026 ISBN: 90-75815-04-2 * le document en entier * | 11 | **DOMAINES TECHNIQUES RECHERCHES (Int.Cl.7)** G05F |

-/--

Le présent rapport a été établi pour toutes les revendications

| Lieu de la recherche | Date d'achèvement de la recherche | Examinateur |
|---|---|---|
| LA HAYE | 27 janvier 2004 | Schobert, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................
& : membre de la même famille, document correspondant

EPO FORM 1503 03.82 (P04C02)

**Office européen des brevets**

## RAPPORT DE RECHERCHE EUROPEENNE

Numéro de la demande

EP 03 29 2203

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | CHIHCHIANG HUA ET AL: "Comparative study of peak power tracking techniques for solar storage system" APPLIED POWER ELECTRONICS CONFERENCE AND EXPOSITION, 1998. APEC '98. CONFERENCE PROCEEDINGS 1998., THIRTEENTH ANNUAL ANAHEIM, CA, USA 15-19 FEB. 1998, NEW YORK, NY, USA,IEEE, US, 15 février 1998 (1998-02-15), pages 679-685, XP010263666 ISBN: 0-7803-4340-9 * le document en entier * --- | 1-11 | |
| A | MATSUO H ET AL: "NOVEL SOLAR CELL POWDER SUPPLY SYSTEM USING THE MULTIPLE-INPUT DC-DC CONVERTER" 20TH INTERNATIONAL TELECOMMUNICATIONS ENERGY CONFERENCE. INTELEC '98. SAN FRANCISCO, CA, OCT. 4 - 8, 1998, INTELEC. INTERNATIONAL TELECOMMUNICATIONS ENERGY CONFERENCE, NEW YORK, NY: IEEE, US, 4 octobre 1998 (1998-10-04), pages 797-802, XP000896384 ISBN: 0-7803-5070-7 * le document en entier * --- | 1-11 | DOMAINES TECHNIQUES RECHERCHES (Int.Cl.7) |
| A | CHIHCHIANG HUA ET AL: "DSP-based controller application in battery storage of photovoltaic system" INDUSTRIAL ELECTRONICS, CONTROL, AND INSTRUMENTATION, 1996., PROCEEDINGS OF THE 1996 IEEE IECON 22ND INTERNATIONAL CONFERENCE ON TAIPEI, TAIWAN 5-10 AUG. 1996, NEW YORK, NY, USA,IEEE, US, 5 août 1996 (1996-08-05), pages 1705-1710, XP010203239 ISBN: 0-7803-2775-6 * le document en entier * --- -/-- | 1-11 | |

Le présent rapport a été établi pour toutes les revendications

| Lieu de la recherche | Date d'achèvement de la recherche | Examinateur |
|---|---|---|
| LA HAYE | 27 janvier 2004 | Schobert, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

| | Office européen des brevets | **RAPPORT DE RECHERCHE EUROPEENNE** | Numéro de la demande EP 03 29 2203 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | ENSLIN J H R ET AL: "INTEGRATED PHOTOVOLTAIC MAXIMUM POWER POINT TRACKING CONVERTER" IEEE TRANSACTIONS ON INDUSTRIAL ELECTRONICS, IEEE INC. NEW YORK, US, vol. 44, no. 6, 1 décembre 1997 (1997-12-01), pages 769-773, XP000750720 ISSN: 0278-0046 * le document en entier * --- | 1-11 | |
| A | HUA C ET AL: "IMPLEMENTATION OF A DSP-CONTROLLED PHOTOVOLTAIC SYSTEM WITH PEAK POWER TRACKING" IEEE TRANSACTIONS ON INDUSTRIAL ELECTRONICS, IEEE INC. NEW YORK, US, vol. 45, no. 1, 1 février 1998 (1998-02-01), pages 99-107, XP000735209 ISSN: 0278-0046 * le document en entier * --- | 1-11 | |
| A | EP 0 827 254 A (CANON KK) 4 mars 1998 (1998-03-04) * abrégé * --- | 1-11 | |
| A | US 5 923 100 A (MOSER ROBERT L ET AL) 13 juillet 1999 (1999-07-13) * abrégé * ----- | 1-11 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 27 janvier 2004 | Schobert, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 03 29 2203

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-01-2004

| Document brevet cité au rapport de recherche | | Date de publication | Membre(s) de la famille de brevet(s) | | Date de publication |
|---|---|---|---|---|---|
| DE 10060108 | A | 27-06-2002 | DE | 10060108 A1 | 27-06-2002 |
| EP 1239576 | A | 11-09-2002 | JP | 3394996 B2 | 07-04-2003 |
| | | | JP | 2002272094 A | 20-09-2002 |
| | | | AU | 2322202 A | 12-09-2002 |
| | | | EP | 1239576 A2 | 11-09-2002 |
| | | | US | 2002163323 A1 | 07-11-2002 |
| FR 2819653 | A | 19-07-2002 | FR | 2819653 A1 | 19-07-2002 |
| | | | CA | 2434405 A1 | 18-07-2002 |
| | | | EP | 1354254 A1 | 22-10-2003 |
| | | | WO | 02056126 A1 | 18-07-2002 |
| | | | NO | 20033174 A | 16-09-2003 |
| US 6262558 | B1 | 17-07-2001 | EP | 1034465 A1 | 13-09-2000 |
| | | | WO | 9928801 A1 | 10-06-1999 |
| EP 0827254 | A | 04-03-1998 | JP | 3352334 B2 | 03-12-2002 |
| | | | JP | 10074113 A | 17-03-1998 |
| | | | CN | 1180261 A ,B | 29-04-1998 |
| | | | EP | 0827254 A2 | 04-03-1998 |
| | | | US | 5923158 A | 13-07-1999 |
| US 5923100 | A | 13-07-1999 | AU | 7465598 A | 22-10-1998 |
| | | | WO | 9844398 A1 | 08-10-1998 |

EPO FORM P0460

Pour tout renseignement concernant cette annexe : voir Journal Officiel de l'Office européen des brevets, No.12/82